# EUROPEAN PATENT SPECIFICATION

(11) **EP 3 402 995 B1**
(45) Date of publication and mention of the grant of the patent: **12.02.2020**
(21) Application number: 17705450.9
(22) Date of filing: 13.01.2017
(51) Int. Cl.: F16C 32/06, B21D 51/00, B26D 3/16, B23B 21/00, B23B 31/00

(54) **CONTAINER BLANK HANDLING APPARATUS**
BEHÄLTER HALTERUNGSVORRICHTUNG
APPAREIL DE MANIPULATION DE RECIPIENTS

(30) Priority: 14.01.2016 GB 201600737
(43) Date of publication of application: 21.11.2018
(73) Proprietor: DeArt Limited, Wrexham LL13 9PN (GB)
(72) Inventor: DE JONG, Berty, Connahs Quay Flintshire CH5 4RR (GB); STEWART, Douglas, Crickhowell Powys NP8 1SA (GB)
(74) Representative: Whitfield, Gillian Janette
(86) International application number: PCT/GB2017/050082
(87) International publication number: WO 2017/122023

(56) References cited:
- GB-A- 1 427 923
- GB-A- 1 503 957
- US-A1- 2014 346 154

## Description

The present invention relates to container blank handling apparatus, and in particular to handling apparatus for systems for trimming systems for cylindrical or tube-like metallic containers such as cans.

### BACKGROUND OF THE INVENTION

During production of cylindrical or tube-like containers, such as cans, for use in the beverage, food or aerosol industry, for example, it is necessary to trim an initial container blank to a desired size. Such container blanks are often produced by drawing metallic material into a cylinder. A container blank is often produced with one closed end. It is necessary to trim the open end of the cylindrical blank in order to provide a container blank of the correct size, and with a suitable edge to which a closure member may be attached.

In order to provide high throughput of container blanks through a trimming process, typical container blank handling apparatus make use of axial insertion the container blank into a support mechanism. The support mechanism defies an aperture for receiving a container blank to be trimmed, and supports the container blank during the trimming process. However, axial loading and unloading of container blanks is a relatively slow and complex operation, which limits the rate at which container blanks may be processed.

US 2014/346154 discloses such a handling apparatus.

It is, therefore, desirable to provide a container blank handling apparatus that container blank overcome the drawbacks of the previously-considered equipment.

### SUMMARY OF THE INVENTION

According to one aspect of the present invention, there is provided a container blank handling apparatus for a container blank trimming system for metallic tubular container blanks, the handling apparatus comprising first and second air bearing body portions having respective arcuate inner surfaces, wherein the first and second body portions are arranged to be moveable with respect to one another between a closed configuration of the apparatus in which the inner surfaces are substantially contiguous so as to form a substantially continuous bearing surface which defines a container blank receiving volume of the apparatus, and an open configuration of the apparatus in which the first and second body portions spaced apart from one another such that the inner surfaces are not contiguous with one another, and wherein at least one of the first and second body portions defines an air delivery pathway therethrough, the air delivery pathway terminating in at least one air delivery aperture in the inner surface of the body portion such that the air delivery pathway is contiguous with the air delivery aperture, the pathway and aperture being arranged for supply of air therethrough into the container blank receiving volume.

In such a way, a container blank handling apparatus embodying an aspect of the present invention is able to receive and eject container blanks quickly, and preferably in a radial direction.

In one example, the other of the first and second body portions defines an air delivery pathway therethrough, the air delivery pathway terminating in at least one air delivery aperture in the inner surface of the body portion concerned such that the air delivery pathway is contiguous with the air delivery aperture, the pathway and aperture being arranged for supply of air therethrough into the container blank receiving volume.

In one example, the first and second body portions are arranged to be moveable linearly with respect to one another.

One example apparatus further comprises an elongate body on which the first body portion is mounted, and a carrier on which the second body portion is mounted, the carrier being adapted to move linearly along the body between the first and second configuration positions of the apparatus.

In one example, the elongate body defines a longitudinal axis, and wherein in the open configuration position, a container blank is locatable in the container blank receiving volume of the first body portion in a direction laterally with respect to the longitudinal axis

According to another aspect of the present invention, there is provided a method of trimming a metallic tubular container blank using a container blank handling apparatus embodying the first aspect of the present invention, the method comprising moving the apparatus into a container blank receiving position; locating a container blank to be trimmed in the container blank reception volume of the first air bearing body portion; moving the second air bearing body portion into the closed configuration position; moving the container blank into a trimming position, the container blank extending through and out of the container blank reception volume in the trimming position; supplying air to the air delivery pathway of at least one of the first and second air bearing body portions; moving the handling apparatus into an operating position adjacent a trimming apparatus; rotating the container blank within the container blank reception volume, with respect to the handling apparatus; moving the handling apparatus to a container blank ejection position; and placing the handling apparatus in the open configuration.

### BRIEF DESCRIPTION OF THE DRAWINGS

Figures 1 and 2 show perspective and side views respectively of a container blank trimming system with a container blank in place;
Figures 3 and 4 show perspective and side views respectively of handling apparatus of the system of Figures 1 and 2 in a first configuration position, with a container blank in place;
Figure 5 shows a perspective view of part of an air bearing of the handling apparatus of Figures 3 and 4;
Figures 6 and 7 show side and perspective views respectively of part the handling apparatus of Figures 3 and 4 in a second configuration position, with a container blank in place; and
Figure 8 shows a perspective view of the handling apparatus of Figures 3 and 4 in a second configuration position.

### DETAILED DESCRIPTION OF THE PREFERRED EMBODIMENTS

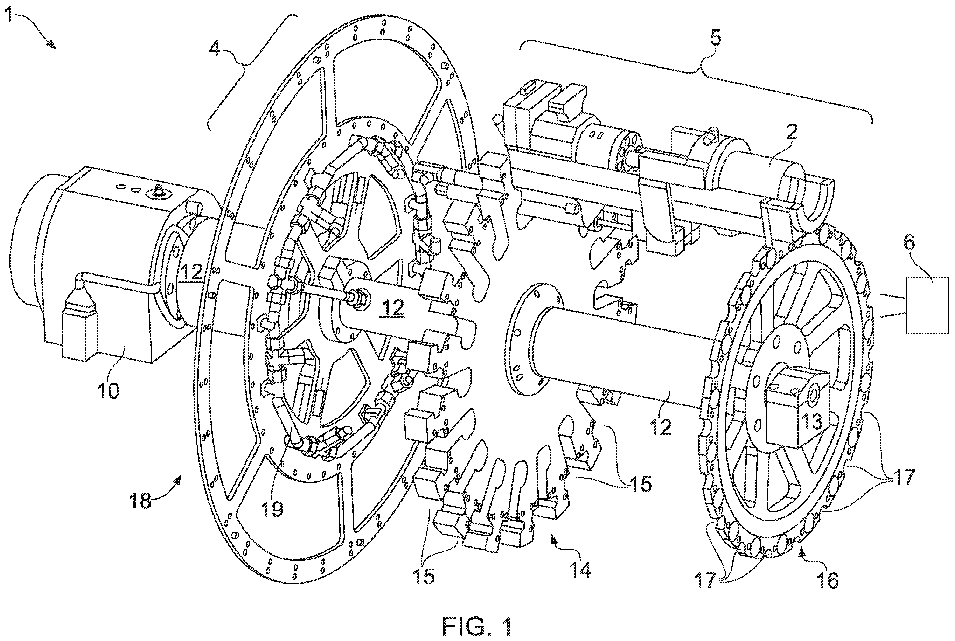

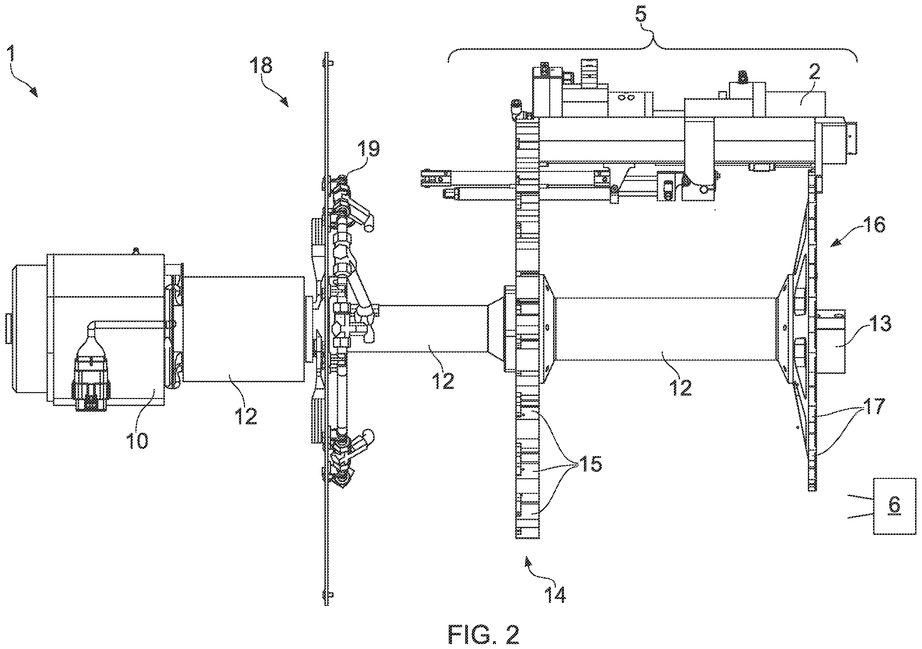

Figures 1 and 2 are perspective and side views respectively of partially complete container blank trimming system 1, with a substantially cylindrical container blank 2 in place. The trimming system 1 comprises drive apparatus 4, handling apparatus 5 and trimming apparatus 6, and is suitable for trimming metallic tubular container blanks. In overall general terms, the trimming system 1 is used to trim a container blank 2 to a desired length. The container blank 2 is delivered to, and held in place, by the handling apparatus 5. The drive apparatus 4 serves to drive the handling apparatus 5, and hence the container blank 2, past the trimming apparatus 6 which operates to conduct the trimming operation on the container blank 2. Following trimming, the container blank 2 is released from the handling apparatus 5.

Figure 1 and 2 show a single handling apparatus 5, also known as a nest, in place on the drive system 4 for the sake of clarity. It will be appreciated that the container blank trimming system 1 will include a plurality of handling apparatus 5, such that a desired throughput of container blanks 2 can be achieved.

The trimming apparatus 6 may be provided by any appropriate trimming technology, most preferably a laser-based apparatus in which a laser beam is used to trim the container blank being processed. Any trimming technology may be used with handling apparatus embodying an aspect of the present invention.

The drive system 4 will be described with reference to Figures 1 and 2, and the handling apparatus 5 will be described with reference to Figures 1 to 9.

The drive system 4 comprises a main drive motor 10 which is connected to rotate a main driveshaft 12. The main driveshaft 12 is supported at a proximal end thereof by the main drive motor 10 and at a distal end thereof by an end bearing 13. It will be appreciated that any appropriate number of bearings may be provided for the main driveshaft 12.

A first and second support wheels 14 and 16 are attached to the main driveshaft 4 for rotation therewith. The first and second support wheels 14 and 16 are spaced apart along the main driveshaft 12, with the second wheel 16 being located towards the end bearing 13, and the first support wheel 14 being located between the second support wheel 16 and the main drive motor 10. A pneumatic system support wheel 18 is attached to the main driveshaft 12 for rotation therewith, and is located between the first support wheel 14 and the main drive motor 10.

The main driveshaft 12 may be provided by a single shaft onto which the support wheels 14, 16 and 18 are attached, or may be provided by a multi-part shaft. In the example shown in Figures 1 and 2 the main driveshaft 12 has a first part that extends from the main motor 10 to the first support wheel 14 and is attached to a first face of that wheel 14. A second part of the driveshaft 12 then is attached to and extends from a second face of the first support wheel 14, to a first face of the second support wheel 16 to which the second part of the main driveshaft 12 is attached. A portion of the main driveshaft 12 extends through the second support wheel 16 to be supported by the end bearing 13.

The pneumatic system support wheel 18 provides a location for mounting of parts 19 of a pneumatic control system. The parts 19 of the pneumatic system are connected with corresponding parts of the handling apparatus 5, the operation of which will be described below.

As mentioned above, in operation, multiple handling apparatus 5 are supported by the first and second support wheels 14 and 16. In Figures 1 and 2, only one handling apparatus 5 is illustrated for the sake of clarity. The handling apparatus 5 are arranged around the circumference of the first and second support wheels 14 and 16. Any appropriate number of handling apparatus 5 may be provided. The first support wheel 14 is provided with an appropriate number of engagement features 15, each for receiving a corresponding part of a handling apparatus 5. Similarly, the second support wheel 16 is provided with an appropriate number of engagement features 17, each for receiving a corresponding part of a handling apparatus 5.

In operation, the main drive motor 10 rotates the main driveshaft 12, and hence the support wheels 14, 16 and 18. As the support wheels 14 and 16 rotate, the handling apparatus 5 rotate about the axis of the main driveshaft 12, such that a container blank 2 held in the handling apparatus 5 passes the trimming apparatus 6.

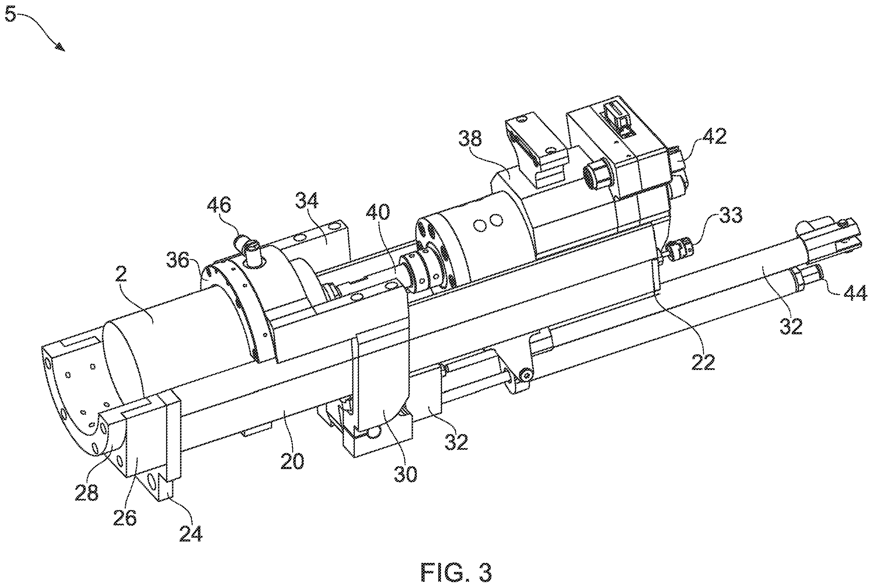

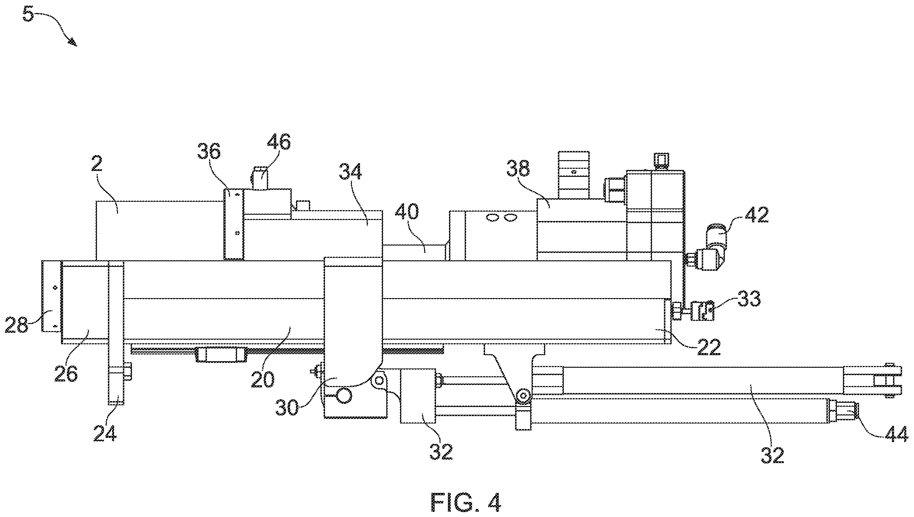

Figures 3 and 4 are perspective and side views respectively of a handling apparatus 5 embodying an aspect of the present invention, with a container blank 2 in place. The handling apparatus 5 is shown in an open configuration in Figures 3 and 4.

The handling apparatus 5 comprises an elongate body 20, which defines a longitudinal axis, and which has a first engagement portion 22 at one end region, and a second engagement portion 24 spaced apart from the first engagement portion 22 at a second end region of the body 20. The first engagement portion 22 is adapted for engagement with an engagement feature 15 of the first support wheel 14. The second engagement portion 24 is adapted for engagement with an engagement feature 17 of the second support wheel 16. In this manner, each handling apparatus 5 is supported by the first and second support wheels 14 and 16 for rotation about the axis of the main driveshaft 12.

The second end region of the body 20 includes a first support 26 on which a first air bearing body portion 28 is located. The first air bearing body portion 28 forms part of an air bearing for the handling apparatus 5, as will be described in more detail below.

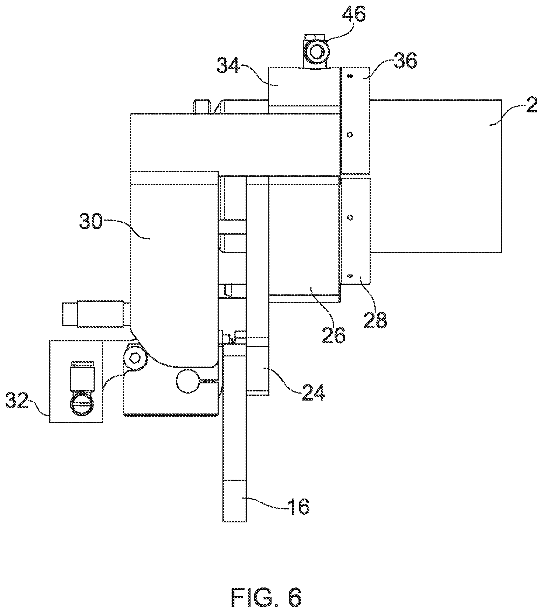

A carrier 30 is located on the body 20 and is arranged to be movable linearly along the body 20 between the open configuration position shown in Figures 3 and 4, and a closed configuration position to be described with reference to Figure 6, 7 and 8. Actuation means 32, preferably pneumatic in nature, are provided to move the carrier 30 with respect to the body 20. A second support 34 is attached to the carrier 30, so as to be movable therewith. A second air bearing body portion 36 is attached to the second support 34, and is movable therewith. The second air bearing body portion forms a second part of the air bearing for the handling apparatus 5, as will be described in more detail below. The air bearing is provided with an air supply by first and second air supply connections 44 and 46.

A handling drive motor 38 is located in a channel in the body 20, and is movable linearly along that channel. The handling drive motor 38 operates to drive a handling driveshaft 40, on which the container blank 2 is attached. The container blank 2 is preferably attached to the driveshaft 40 using a vacuum system, with the vacuum being provided through a supply connection 42. The handling drive motor 38 operates to rotate the container blank 2 with respect to the handling apparatus during the trimming operation.

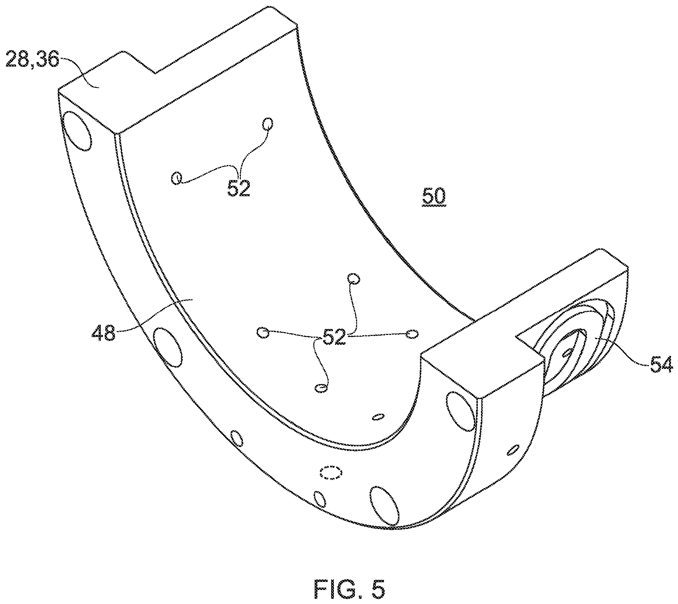

Figure 5 illustrates one of the first and second air bearing body portions 28 and 36. Each body portion 28, 36 is semi-cylindrical and defines an arcuate inner surface 48. The inner surface 48 defines a container blank reception volume 50. The inner surface 48 conforms substantially to the outer surface of a container blank to be processed. In the present example, where there are two air bearing body portions, the inner surface 48 of each body portion 28, 36 conforms substantially to half of the outer surface of a container blank to be processed.

In the open configuration position shown in Figure 3 and 4, the container blank reception volume 50 is open so as to allow a container blank to be placed in the volume 50, and to be released from the volume 50. The container blank 2 is moved into place in the container blank reception volume 50 of the first body portion 26 in a direction lateral to the longitudinal axis of the body 20. This lateral direction of placement of the container blank 2 speeds up the placing of the blank 2 when compared to the axial loading of previously considered apparatus.

The body portion 28, 36 defines a plurality of air delivery apertures 52 which extend through the surface 48. Each air bearing body portion 28, 36 is provided with at least one air delivery pathway 54 which extends within the body portion 28, 36 concerned. The air delivery pathway(s) 54 for the first air bearing body portion 28 are arranged to connect with air delivery channels in the first support 26, and thereby connect to the first air supply connection 44. The air delivery pathway(s) 54 for the second air bearing body portion 36 are arranged to connect with air delivery channels in the second support 34, and thereby connect to the second air supply connection 46.

The air delivery pathway(s) 54 terminate at the air delivery apertures 52, such that air supplied through the delivery pathway(s) 54 exits the apertures 52 into the container blank reception volume 50, in order to provide an air bearing for the container blank 2, as will be described in more detail below.

In the example shown, there are two air bearing body portions each having a single body member. It will be readily appreciated that any plural number of body portions and body members may be provided. For example, the second air bearing body portion 36 may be provided by a pair of body members that are each movable with respect to the first body portion 28.

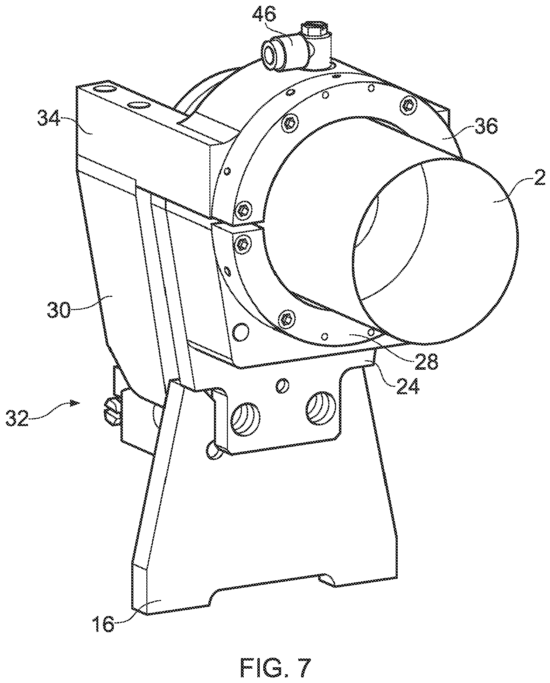

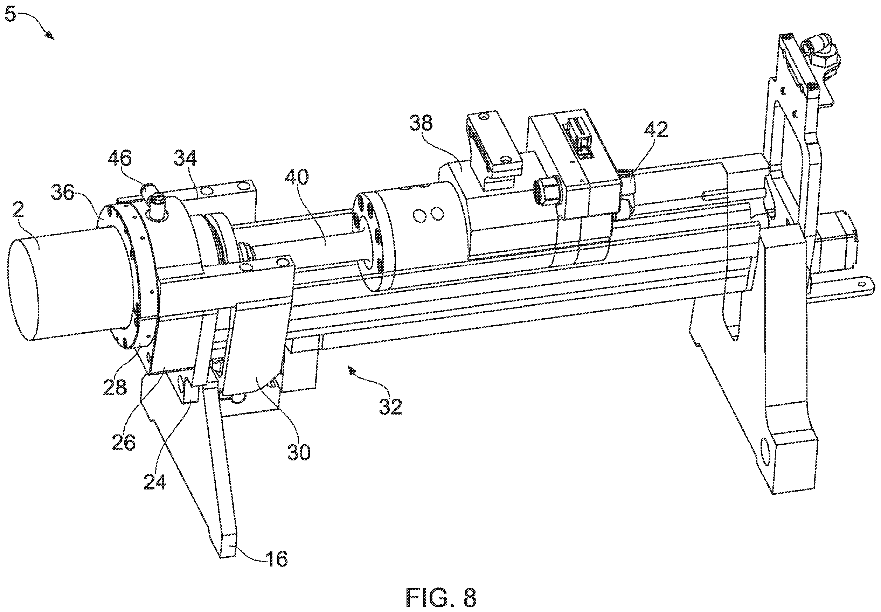

Figures 6 and 7 shows the air bearing end region of the handling apparatus 5 in the closed configuration position. Figure 8 shows the handling apparatus 5 in the closed configuration position. To reach this position, the carrier 30 is moved linearly along the body 20, by the actuation means 32, to the second end region of the body 20. In the closed configuration position, the second air bearing body portion 36 is located adjacent the first air bearing body portion 28, such that the respective inner surfaces 48 of the two body portions are substantially aligned. The first and second body portion 26 and 38 thereby form the complete container blank reception volume 50 therebetween.

The handling drive motor 38 is also moved towards the second end region by the actuation means 32, such that the container blank 2, mounted on one end of the handling driveshaft 40 extends through and out of the container blank reception volume 50 of the air bearing 26, 38. In this position, the trimming apparatus 6 (Figures 1 and 2) is able to interact with the container blank 2 when the handling apparatus 5 is brought into the correct position by the drive apparatus 4.

The linear position of the handling motor 38 is adjusted by a pneumatic linear motor which receives an air supply through connection 33. The linear position of the handling motor 38 is determined in dependence upon the length of the container required, and is adjusted so that the container blank extends by the appropriate amount from the air bearing. The amount by which the container blank 2 extends will determine the amount of the container blank that is trimmed by the trimming apparatus.

In operation, air is supplied via the air supply connections 44 and 46 to the air delivery pathways 54 and air delivery apertures 52 in the air bearing body portions 28 and 36. Air is thereby introduced in to the container blank reception volume 50. Since the container blank 2 is in place in the container blank reception volume 50, an air cushion is built up between the inner surfaces 48 of the air bearing body portions 28 and 36 and the outer surface of the container blank 2. This air cushion serves as an air bearing such that the container blank 2 is supported in the correct position in the handling apparatus during the trimming process. During the trimming process, the handling drive motor 38 rotates the container blank 2 when the container blank is in the vicinity of the trimming apparatus. In this way, the trimming apparatus container blank be stationary, and the throughput of container blanks being trimmed may be increased.

The air bearing, or air stabilisation system, provided by the first and second air bearing body portions and associated air delivery parts, serves to damp vibrations of the container blank 2 as it is rotated with respect to the handling apparatus 5. Reduction and damping of such vibrations is of particular importance when the trimming apparatus 6 is a laser based apparatus which requires the container blank surface to be within an acceptable range of the laser in order to achieve a consistently high quality trimming cut of the container blank 2. The air stabilisation system serves to ensure that the container bank remains cylindrical, at least within predetermined desired tolerances, which leads to the higher quality cut.

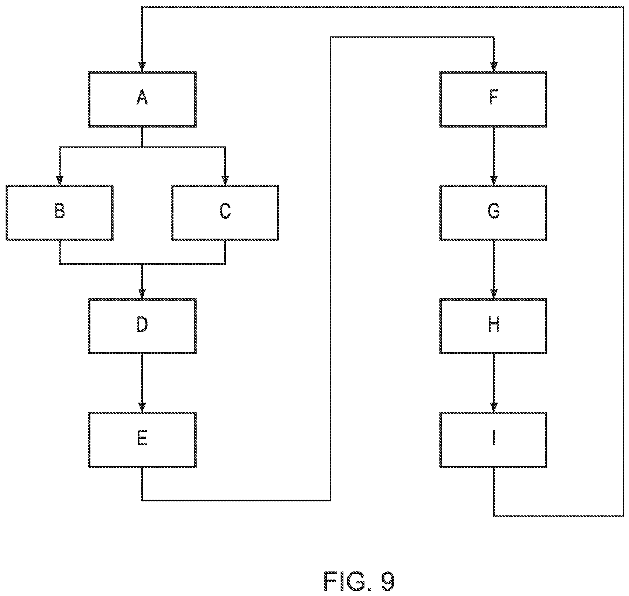

Trimming of a container blank using the handling apparatus embodying an aspect of the present invention is summarised as follows, with reference to Figure 9:
A. A handling apparatus 5 in the open configuration position is brought into position to receive a container blank 2, which is placed into the container blank reception volume 50 of the first air bearing body portion 28 laterally with respect to the elongate body 20. A vacuum is supplied to the vacuum supply connection 42, and the container blank is pulled into place onto one end of the driveshaft 40 for rotation therewith.
B. The actuation means 32 moves the carrier 30 towards the second end region of the body 20, such that the second air bearing body portion 36 is brought substantially into alignment with the first air bearing body portion 28. The handling apparatus is then in the closed configuration position (Figures 6, 7 and 8).
C. At the same time, the handling drive motor 38 is moved linearly along the body 20 towards the second end region of the body 20, such that the container blank 2 is moved to extend through and out of the container blank reception volume 50 of the air bearing by a predetermined desired amount dependent upon the required length of container.
D. The main drive motor 10 of the drive apparatus 4 operates to rotate the support wheels 14 and 16, so as move the handling apparatus, and hence the container blank, into position adjacent the trimming apparatus 6.
E. Air is supplied through respective air supply parts 44, 46 to the first and second air bearing body portions, thereby causing the generation of stabilising air cushion between the outer surface of the container blank 2 and the inner surfaces 48 of the first and second air bearing body portions 26 and 38.
F. The handling drive motor 38 operates to rotate the container blank 2 so that the trimming apparatus is able to cut the container blank 2 around its complete circumference. The waste material which is trimmed from the container blank is discarded.
G. The drive apparatus 4 continues to rotate the handling apparatus 5, so that the container blank passes the trimming apparatus, to a container blank ejection position. As this move occurs, the air supply is stopped, the handling motor 38 stops rotating, and the carrier 30 and second support 34 are moved to the open configuration.
H. When the container blank ejection position is reached, the vacuum supply stopped, such that the container blank 2 is able to exit the container blank reception volume 50. For example, the container blank ejection position may be such that the container blank exits the volume under the influence of gravity.
I. The drive apparatus 4 then returns the handling apparatus 5 to the container blank reception positon for processing of another container blank 2.

## Claims

1. A container blank handling apparatus for a container blank trimming system (1) for metallic tubular container blanks, the handling apparatus comprising first and second air bearing body portions (28,36) having respective arcuate inner surfaces (48), wherein the first and second body portions are arranged to be moveable with respect to one another between a closed configuration of the apparatus in which the inner surfaces are substantially contiguous so as to form a substantially continuous bearing surface which defines a container blank receiving volume of the apparatus, and an open configuration of the apparatus in which the first and second body portions spaced apart from one another such that the inner surfaces are not contiguous with one another, and
wherein at least one of the first and second body portions (28,36) defines an air delivery pathway (54) therethrough, the air delivery pathway terminating in at least one air delivery aperture (52) in the inner surface of the body portion such that the air delivery pathway is contiguous with the air delivery aperture, the pathway and aperture being arranged for supply of air therethrough into the container blank receiving volume.

2. An apparatus as claimed in claim 1, wherein the other of the first and second body portions defines an air delivery pathway therethrough, the air delivery pathway terminating in at least one air delivery aperture in the inner surface of the body portion concerned such that the air delivery pathway is contiguous with the air delivery aperture, the pathway and aperture being arranged for supply of air therethrough into the container blank receiving volume.

3. An apparatus as claimed in any one of the preceding claims, wherein the first and second body portions are arranged to be moveable linearly with respect to one another.

4. An apparatus as claimed in any one of the preceding claims, further comprising an elongate body on which the first body portion is mounted, and a carrier on which the second body portion is mounted, the carrier being adapted to move linearly along the body between the open and closed configuration positions of the apparatus.

5. An apparatus as claimed in claim 4, wherein the elongate body defines a longitudinal axis, and wherein in the open configuration position, a metallic tubular container blank is locatable in the container blank receiving volume of the first body portion in a direction laterally with respect to the longitudinal axis

6. A method of trimming a metallic tubular container blank using a container blank handling apparatus as claimed in any one of the preceding claims, the method comprising:
a. moving the apparatus into a container blank receiving position;
b. locating a container blank to be trimmed in the container blank reception volume of the first air bearing body portion;
c. moving the second air bearing body portion into the closed configuration position;
d. moving the container blank into a trimming position, the container blank extending through and out of the container blank reception volume in the trimming position;
e. supplying air to the air delivery pathway of at least one of the first and second air bearing body portions;
f. moving the handling apparatus into an operating position adjacent a trimming apparatus;
g. rotating the container blank within the container blank reception volume, with respect to the handling apparatus;
h. moving the handling apparatus to a container blank ejection position; and
i. placing the handling apparatus in the open configuration.

## Patentansprüche

1. Eine Behälterrohling-Handhabungsvorrichtung für ein Behälterrohling-Zuschneidsystem (1) für metallische rohrförmige Behälterrohlinge, wobei die Handhabungsvorrichtung erste und zweite Luftlagerungs-Körperabschnitte (28,36) mit jeweils bogenförmigen Innenflächen (48) umfasst,
wobei die ersten und zweiten Körperabschnitte so eingerichtet sind, dass sie in Bezug aufeinander beweglich sind zwischen einer geschlossenen Konfiguration der Vorrichtung, in der die inneren Flächen im Wesentlichen aneinander angrenzen, um eine im Wesentlichen kontinuierliche Lagerfläche zu bilden, die ein Behälterrohling-Aufnahmevolumen der Vorrichtung definiert, und einer offenen Konfiguration der Vorrichtung, in der die ersten und zweiten Körperabschnitte voneinander beabstandet sind, so dass die Innenflächen nicht aneinander angrenzen, und
wobei mindestens einer der ersten und zweiten Körperabschnitte (28,36) einen Luftzufuhrweg (54) durch diese definiert, wobei der Luftzufuhrweg an mindestens einer Luftzufuhröffnung (52) in der Innenfläche des Körperabschnitts endet, so dass der Luftzufuhrweg an die Luftzufuhröffnung angrenzt, wobei der Weg und die Öffnung zur Luftzufuhr durch diese in das Behälterrohling-Aufnahmevolumen eingerichtet sind.

2. Vorrichtung gemäß Anspruch 1, wobei der jeweils andere der ersten und zweiten Körperabschnitte einen Luftzufuhrweg durch diese definiert, wobei der Luftzufuhrweg an mindestens einer Luftzufuhröffnung in der Innenfläche des jeweiligen Körperabschnitts endet, so dass der Luftzufuhrweg an die Luftzufuhröffnung angrenzt, wobei der Weg und die Öffnung zur Luftzufuhr durch diese in das Behälterrohling-Aufnahmevolumen eingerichtet sind.

3. Vorrichtung gemäß einem der vorhergehenden Ansprüche, wobei die ersten und zweiten Körperabschnitte so eingerichtet sind, dass sie in Bezug zueinander linear beweglich sind.

4. Vorrichtung gemäß einem der vorhergehenden Ansprüche, ferner umfassend einen länglichen Körper, auf dem der erste Körperabschnitt montiert ist, und einen Träger, auf dem der zweite Körperabschnitt montiert ist, wobei der Träger ausgebildet ist, um sich linear entlang des Körpers zwischen den offenen und geschlossenen Konfigurationspositionen der Vorrichtung zu bewegen.

5. Vorrichtung gemäß Anspruch 4, wobei der längliche Körper eine Längsachse definiert, und wobei in der offenen Konfigurationsposition ein metallischer rohrförmiger Behälterrohling in dem Behälterrohling-Aufnahmevolumen des ersten Körperabschnitts in einer Richtung seitlich zur Längsachse fixierbar ist.

6. Ein Verfahren zum Zuschneiden eines metallischen rohrförmigen Behälterrohlings unter Verwendung einer Behälterrohling-Handhabungsvorrichtung gemäß einem der vorhergehenden Ansprüche, wobei das Verfahren umfasst:
a) Bewegen der Vorrichtung in eine Behälterrohling-Aufnahmeposition;
b) Anbringen eines zuzuschneidenden Behälterrohlings in dem Behälterrohling-Aufnahmevolumen des ersten Luftlagerungs-Körperabschnitts;
c) Bewegen des zweiten Luftlagerungs-Körperabschnitts in die geschlossene Konfigurationsposition;
d) Bewegen des Behälterrohlings in eine Zuschneidposition, wobei sich der Behälterrohling in der Zuschneidposition durch das und aus dem Behälterrohling-Aufnahmevolumen erstreckt;
e) Zuführen von Luft zu dem Luftzufuhrweg von mindestens einem der ersten und zweiten Luftlagerungs-Körperabschnitte;
f) Bewegen der Handhabungsvorrichtung in eine Betriebsposition angrenzend an eine Zuschneidvorrichtung;
g) Drehen des Behälterrohlings innerhalb des Behälterrohling-Aufnahmevolumens in Bezug auf die Handhabungsvorrichtung;
h) Bewegen der Handhabungsvorrichtung in eine Behälterrohling-Ausstoßposition; und
i) und Platzieren der Handhabungsvorrichtung in die offene Konfiguration.

## Revendications

1. Dispositif de manipulation d'ébauches de récipient pour un système d'ébavurage d'ébauches de récipient (1) pour des ébauches de récipient tubulaire métallique, le dispositif de manipulation comprenant des première et seconde parties de corps de palier à air (28, 36) ayant des surfaces internes arquées respectives (48),
dans lequel les première et seconde parties de corps sont agencées pour être mobiles l'une par rapport à l'autre entre une configuration fermée du dispositif dans laquelle les surfaces internes sont sensiblement contiguës de manière à former une surface de palier sensiblement continue qui définit un volume de réception d'ébauche de récipient du dispositif, et une configuration ouverte du dispositif dans laquelle les première et seconde parties de corps sont espacées l'une de l'autre de sorte que les surfaces internes ne sont pas contiguës l'une avec l'autre, et
dans lequel au moins l'une des première et seconde parties de corps (28, 36) définit un passage de distribution d'air (54) à travers celle-ci, le passage de distribution d'air se terminant dans au moins une ouverture de distribution d'air (52) dans la surface interne de la partie de corps de sorte que le passage de distribution d'air est contigu avec l'ouverture de distribution d'air, le passage et l'ouverture étant agencés pour une alimentation en air à travers ceux-ci vers le volume de réception d'ébauche de récipient.

2. Dispositif selon la revendication 1, dans lequel l'autre des première et seconde parties de corps définit un passage de distribution d'air à travers celle-ci, le passage de distribution d'air se terminant dans au moins une ouverture de distribution d'air dans la surface interne de la partie de corps concernée de sorte que le passage de distribution d'air est contigu avec l'ouverture de distribution d'air, le passage et l'ouverture étant agencés pour une alimentation en air à travers ceux-ci vers le volume de réception d'ébauche de récipient.

3. Dispositif selon l'une quelconque des revendications précédentes, dans lequel les première et seconde parties de corps sont agencées pour être linéairement mobiles l'une par rapport à l'autre.

4. Dispositif selon l'une quelconque des revendications précédentes, comprenant en outre un corps allongé sur lequel la première partie de corps est montée et un support sur lequel la seconde partie de corps est montée, le support étant apte à se déplacer linéairement le long du corps entre les positions de configuration ouverte et fermée du dispositif.

5. Dispositif selon la revendication 4, dans lequel le corps allongé définit un axe longitudinal, et dans lequel dans la position de configuration ouverte, une ébauche de récipient tubulaire métallique peut être positionnée dans le volume de réception d'ébauche de récipient de la première partie de corps dans une direction latéralement par rapport à l'axe longitudinal.

6. Procédé d'ébavurage d'une ébauche de récipient tubulaire métallique à l'aide d'un dispositif de manipulation d'ébauches de récipient selon l'une quelconque des revendications précédentes, le procédé comprenant :
a. le déplacement du dispositif dans une position de réception d'ébauche de récipient ;
b. le positionnement d'une ébauche de récipient à ébavurer dans le volume de réception d'ébauche de récipient de la première partie de corps de palier à air ;
c. le déplacement de la seconde partie de corps de palier à air dans la position de configuration fermée ;
d. le déplacement de l'ébauche de récipient dans une position d'ébavurage, l'ébauche de récipient s'étendant à travers et hors du volume de réception d'ébauche de récipient dans la position d'ébavurage ;
e. l'alimentation en air du passage de distribution d'air d'au moins l'une des première et seconde parties de corps de palier à air ;
f. le déplacement du dispositif de manipulation dans une position fonctionnelle adjacente à un dispositif d'ébavurage ;
g. la rotation de l'ébauche de récipient à l'intérieur du volume de réception d'ébauche de récipient, par rapport au dispositif de manipulation ;
h. le déplacement du dispositif de manipulation vers une position d'éjection d'ébauche de récipient ; et
i. le placement du dispositif de manipulation dans la configuration ouverte.
